# EUROPÄISCHE PATENTSCHRIFT

(11) **EP 1 574 739 B1**
(45) Veröffentlichungstag und Bekanntmachung des Hinweises auf die Patenterteilung: **30.04.2008**
(21) Anmeldenummer: 05003559.1
(22) Anmeldetag: 18.02.2005
(51) Int. Cl.: F16F 1/38, F16C 27/00, B60G 7/02

(54) **Lager, insbesondere in Automobilen**
Bearing, especially for vehicles
Palier notamment pour véhicules

(30) Priorität: 12.03.2004 DE 102004012578
(43) Veröffentlichungstag der Anmeldung: 14.09.2005
(73) Patentinhaber: BASF SE, 67056 Ludwigshafen (DE)
(72) Erfinder: Wulf, Andreas, 49406 Barnstorf (DE)

(56) Entgegenhaltungen:
- WO-A-03/091594
- DE-A1- 19 937 714
- FR-A- 2 816 685
- US-A- 3 194 614

## Beschreibung

Die Erfindung betrifft ein Lager, enthaltend eine hohle, bevorzugt zylindrische Außenbuchse (i), mindestens ein hohles, bevorzugt zylindrisches, bevorzugt elastisches Lagerelement (ii) und eine hohle, bevorzugt zylindrische Innenbuchse (iii)wobei mindestens zwei hohle Lagerelemente (ii) in dem Lager enthalten sind, die unterschiedliche innere und/oder äußere Abmaße aufweisen, dadurch gekennzeichnet, dass zwischen Außenbuchse (i) und Lagerelement (ii) mindestens ein Bauteil (x) positioniert ist, dessen Geometrie variiert. Außerdem bezieht sich die Erfindung auf Verfahren zur Herstellung dieser Lager und auf Automobile oder Lastkraftwagen enthaltend die erfindungsgemäßen Lager.

Lager werden in Automobilen beispielsweise innerhalb des Fahrwerks verwendet und sind allgemein bekannt. Mit Hilfe von Lagern werden im Automobil Aggregate, Getriebe, Motoren, Fahrwerksbauteile u.a. untereinander oder mit der Karosserie verbunden. Dabei erfüllen sie durch die Verwendung von Elastomerwerkstoffen die Funktion der elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z.B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Lager ist abhängig vom intrinsischen Dämpfungsvermögen des eingesetzten Elastomerwerkstoffes.

Rundlager sind bekannt. Beispielsweise beschreibt die WO 03/091594A1 ein Rundlager bestehend aus mindestens zwei Lagerelementen auf der Basis von Elastomeren und einer hohlen Innenbuchse.

Aufgabe der vorliegenden Erfindung war es, Lager enthaltend eine hohle Außenbuchse (i), ein hohles Lagerelement (ii) und eine hohle Innenbuchse (iii) zu entwickeln, die über eine möglichst variable, individuell einzustellende elastische Dämpfungscharakteristik und zudem ein möglichst sicheres Gefüge der Einzelteile verfügen. Außerdem sollte die Montage und insbesondere Demontage vereinfacht werden.

Diese Aufgabe konnte dadurch gelöst werden, dass zwischen Außenbuchse (i) und Lagerelement (ii) mindestens ein Bauteil (x) positioniert ist, dessen Geometrie, bevorzugt dessen Durchmesser bevorzugt innerhalb des Lagers variiert, d.h. das Bauteil weist keine streng zylindrische Form auf, sondern verfügt im Längsschnitt parallel zur axialen Ausrichtung des Lagers über eine konturierte Form. Dabei besteht das Lager aus einer hohlen Außenbuchse (i), mindestens einem hohlen Lagerelement (ii) und einer hohlen Innenbuchse (iii), wobei mindestens zwei hohle Lagerelemente (ii) in dem Lager enthalten sind, die unterschiedliche innere und/oder äußere Abmaße aufweisen.

Durch die konturierte Form des Bauteiles (x) kann der Querschnitt innerhalb des Lagers, der von dem oder den Lagerelementen eingenommen werden kann, individuell gesteuert werden. Dadurch wird eine - im Vergleich zu einem streng zylindrischen, d.h. über die gesamte Länge gleichbleibenden äußeren und inneren Durchmesser aufweisenden Lagerelement - höhere Variabilität im elastischen und Dämpfungsverhalten erreicht.

Bevorzugt sind Lager, bei denen mindestens zwei, besonders bevorzugt mindestens drei hohle zylindrische Lagerelemente (ii) in dem Lager enthalten sind, die unterschiedliche innere und/oder äußere Abmaße, bevorzugt Durchmesser aufweisen. Dabei können die hohlen zylindrischen Lagerelemente (ii) mit mindestes einer ihrer äußeren Flächen bevorzugt in Kontakt mit der inneren Oberfläche des bevorzugt zylindrischen, hohlen Bauteiles (x) stehen. Die Hohlräume der hohlen zylindrischen Lagerelemente (ii) können das gleiche Maß, bevorzugt den gleichen Durchmesser aufweisen, wobei in dem Hohlraum in Kontakt mit den Lagerelementen (ii) die Innenbuchse platziert werden kann. Das äußere Maß, bevorzugt der äußere Durchmesser der Lagerelemente (ii) kann dabei entsprechend dem inneren Maß, bevorzugt Durchmesser des Bauteiles (x) variiert werden, d.h. die Lagerelemente (ii) stehen bevorzugt mit einer ihrer Flächen in Kontakt mit der inneren Oberfläche des Bauteiles (x).

In den Lagern befindet sich die Innenbuchse (iii) innerhalb des/der Hohlraums/räume des/der Lagerelemente/s (ii) und das/die Lagerelement/e (ii) in dem Hohlraum des Bauteiles (x). Alle Komponenten befinden sich in der hohlen Außenbuchse (i).

Bevorzugt begrenzt das Bauteil (x) eine axiale Verschiebung des Lagerelementes (ii) zwischen Außenbuchse (i) und Innenbuchse (iii) in eine Richtung.

Bevorzugt weist das Bauteil (x) einen bevorzugt umlaufenden Rand (xi) auf, der eine Stirnseite von (i), bevorzugt (i) zumindest teilweise abdeckt. Der Rand (xi) weist bevorzugt eine Breite zwischen 1 mm und 10 mm auf. Der Rand (xi) bewirkt, dass eine axiale Verschiebung des Bauteiles (x) und der Lagerelemente (ii) und der Innenbuchse (iii) durch die Fixierung insbesondere an der Außenbuchse (i) verhindert wird.

Die Dicke des Bauteiles (x), d.h. insbesondere auch die Dicke des Randes (xi) beträgt bevorzugt zwischen 0,75 mm und 3 mm.

Die erfindungsgemäßen Lager können allgemein übliche Abmessungen aufweisen, die je nach Anwendung variieren können. Bevorzugt weist das Lagerelement (ii) einen äußeren Durchmesser zwischen 20 mm und 150 mm, einen Durchmesser des Hohlraums zwischen 10 mm und 80 mm und eine Länge, d.h. axiale Ausdehnung zwischen 15 mm und 100 mm auf. Diese bevorzugten Abmessungen sind insbesondere für Anwendungen im Automobilbau besonders bevorzugt.

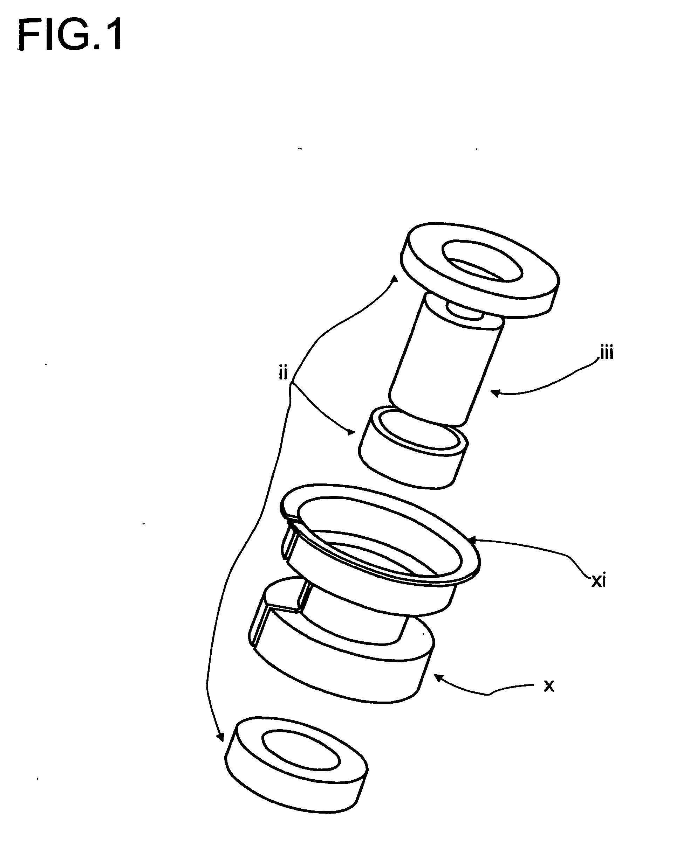

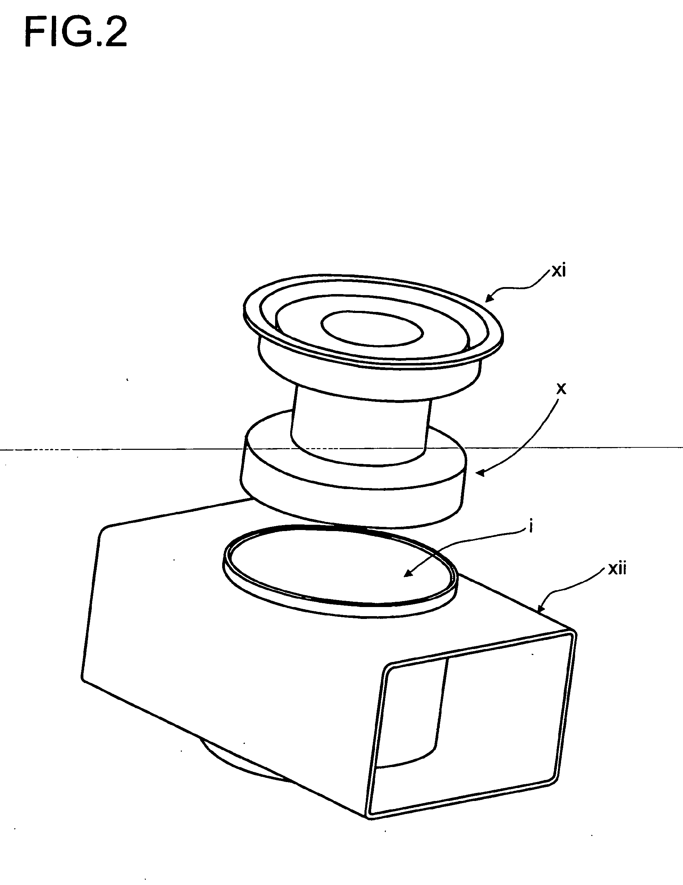

Das konturierte Bauteil (x) sowie Lagerelemente (ii), die entsprechend dem über die Länge des Bauteiles (x) variablen Durchmesser von (x) einen entsprechend unterschiedlichen Durchmesser aufweisen, sind in den Figuren 1 bis 3 beispielhaft dargestellt.

Die erfindungsgemäßen Lager, enthaltend eine hohle Außenbuchse (i), ein hohles Lagerelement (ii), eine hohle Innenbuchse (iii) und Bauteil (x), können dadurch hergestellt werden, dass man das Bauteil (x) in dem Hohlraum der Außenbuchse (i) positioniert und anschließend das oder bevorzugt die Lagerelemente (ii) und die hohle Innenbuchse (iii) in der bevorzugt vormontierten Außenbuchse (i) und dem Bauteil (x) positioniert, bevorzugt in die bevorzugt vormontierte Außenbuchse (i) und das Bauteil (x) presst.

Alternativ ist es möglich, die erfindungsgemäßen Lager, enthaltend eine hohle Außenbuchse (i), ein hohles Lagerelement (ii), eine hohle Innenbuchse (iii) und Bauteil (x), herzustellen, indem man die Innenbuchse (iii) in dem Hohlraum des oder der Lagerelemente (ii) positioniert, das oder die Lagerelemente (ii) in dem Bauteil (x) und anschließend das Bauteil (x), das Lagerelement (ii) und die Innenbuchse (iii) in den Hohlraum der Außenbuchse (i) einfügt, bevorzugt einpresst.

Bevorzugt wird nicht das gesamte Lager enthaltend (i), (ii), (x) und (iii) komplett fertig montiert und anschließend in das Objekt, in dem das Lager eingesetzt werden soll, eingebaut, sondern es kann eine Vormontage der Außenbuchse (i) mit der äußeren Struktur, insbesondere der Karosserie eines Kraftfahrzeugs erfolgen und erst anschließend Innenbuchse (iii), Lagerelement (ii) und Bauteil (x) in den Hohlraum der Außenbuchse (i) eingefügt werden. Bevorzugt weist das Objekt, in dem das Lager zum Einsatz kommen soll, bereits eine Einrichtung, die als Außenbuchse dienen kann, auf. D.h. die Außenbuchse wird erst mit dem Objekt montiert oder ist bereits als integraler Teil des Objekts geplant und erst anschließend erfolgt die Montage des Lagerelementes (ii) und der Innenbuchse (iii) mit der Außenbuchse (i). Dies bietet folgende Vorteile: Die Lagerelemente können auf der Basis von Halbzeugen hergestellt werden, so dass Änderungen des Materials und der Geometrie sehr einfach durchzuführen sind. Weiterhin sind qualitätssichernde Maßnahmen an den Lagerelementen sehr leicht durchführbar. Die Prozesssicherheit wird dadurch erhöht. Die Lagerelemente können sehr flexibel zusammengesetzt werden, so dass beispielsweise Lagerelemente mit unterschiedlichen mechanischen Eigenschaften miteinander kombiniert werden können. Die Bauart solcher Lager erübrigt die Außenhülse und spart somit ein Einzelteil. Zudem können durch die Bauart solcher Lager Kalibrierschritte gespart werden, die bei Lagern konventioneller Bauart durchgeführt werden müssen. Außerdem können Haftvermittler bei der Fertigung gespart werden.

Bevorzugt wird somit erst die Außenbuchse mit dem Objekt, das das Lager enthalten soll, montiert, d.h. verbunden, beispielsweise durch Verschrauben oder Schweißen, und anschließend das Lagerelement (ii), die Innenbuchse (iii) und das Bauteil (x) in den Hohlraum der Außenbuchse (i) eingeführt. In einer anderen bevorzugten Ausführungsform ist die Außenbuchse (i) Bestandteil des Objektes, das das Lager enthalten soll.

Bei dem Objekt, das das Lager enthalten soll, kann es sich bevorzugt um Teile des Fahrwerks, beispielsweise den Fahrschemel, eines Automobils oder eines Lastkraftwagens handeln. Dabei kann die Außenbuchse (i) entweder mit dem Fahrschemel vormontiert werden, beispielsweise verschraubt oder angeschweißt werden, oder bereits bei der Entwicklung des Fahrschemels als Teil des Fahrschemels geplant werden und somit bei der Montage von Innenbuchse (iii) und Lagerelement (ii) als integrales Teil des Fahrwerks vorliegen. Erfindungsgemäß ist die Außenbuchse (i) vor dem Einfügen des Lagerelementes (ii) und der Innenbuchse (iii) in die Außenbuchse (i) bereits Teil des Fahrschemels, d.h. fest mit dem Fahrschemel montiert, beispielsweise verschraubt oder verschweißt.

Als Objekte, die mittels des Lagers insbesondere mit der Karosserie eines Automobils oder eines Lastkraftwagens gelagert werden sollen, kommen beispielsweise alle Arten von Aggregaten, Fahrschemeln, Lenkern, Getrieben und/oder Anbauteilen, bevorzugt Achsträger (Fahrschemel) in Frage. Diese mit dem bevorzugt dämpfend wirkenden Lager zu lagernden Teile können beispielsweise dadurch mit dem Lager befestigt werden, dass man sie mit Hilfe Schrauben-, Bolzen, Stift-, Niet- oder anderen form- oder kraftschlüssigen Verbindungen, bevorzugt Schrauben-, Bolzen, Stift-, Niet-Verbindungen befestigt, bevorzugt mit Hilfe der hohlen Innenbuchse.

Bevorzugt sind Lager, bei denen der Achsträger (Fahrschemel) eines Kraftfahrzeugs fest mit der Außenbuchse (i) verbunden ist und über die Innenbuchse (iii) an der Karosserie befestigt wird.

Bevorzugt sind Lager, bei denen die Karosserie (xiii) eines Kraftfahrzeugs fest mit der Innenbuchse (iii) verbunden ist und an dem Bauteil (x) (i) Fahrwerksteile (xii), bevorzugt Achsträger befestigt sind.

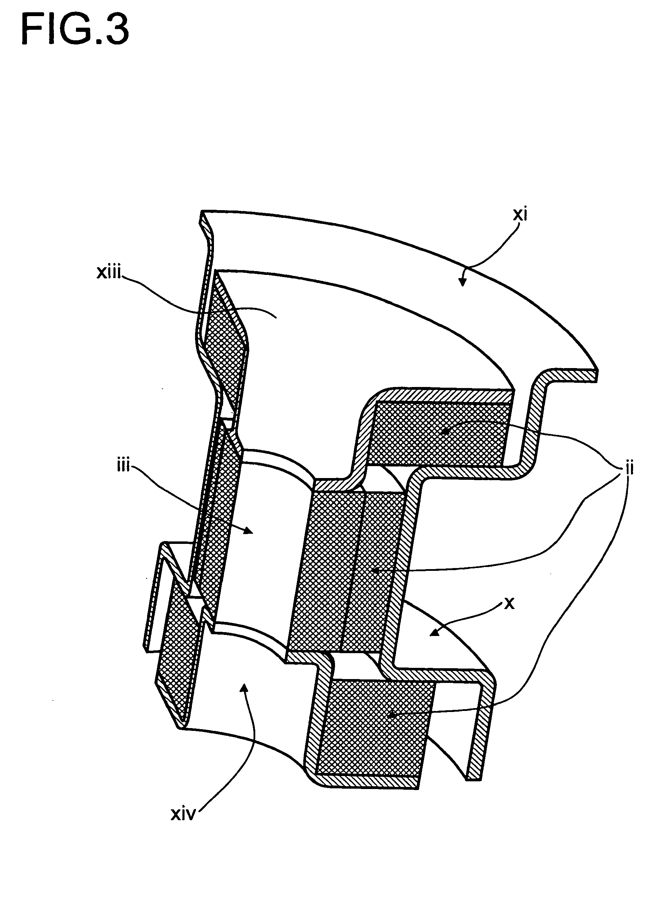

Besonders bevorzugt sind Lager, bei denen die Karosserie (xiii) eines Kraftfahrzeugs fest mit der Innenbuchse (iii) verbunden ist und das Lager über einen Deckel (xiv) gespannt ist (siehe die beispielhafte Darstellung in Figur 3).

Beim Einpressen des Lagerelementes (ii) und der Innenbuchse (iii) in den Hohlraum des Bauteiles (x), bevorzugt auch bei der Montage der Innenbuchse (iii) in den Hohlraum des Lagerelementes (ii), kann man gegebenenfalls ein Einpresshilfsmittel benutzt wird, das reibungsvermindernde Eigenschaften besitzt. In Frage kommen beispielsweise gängige Schmierstoffe oder Seifen.

Die Innenbuchse (iii) kann auf üblichen Materialien basieren, beispielsweise Metallen, z.B. Stahl, Eisen und/oder Aluminium oder harten Kunststoffen, z.B. TPU. Die Innenbuchse (iii) verfügt über eine Innenbohrung üblicherweise zur Aufnahme eines Befestigungsbolzen. Der Außendurchmesser ergibt sich aus Festigkeitsgründen.

Das Lagerelement (ii) kann aus einem oder mehreren Einzelteilen, die elastische Eigenschaften aufweisen, bestehen. Werden mindestens drei Lagerelemente verwendet, so können diese je nach Anforderung quasi in einem Stecksystem zum vollständigen Lagerelement zusammengefügt werden, wobei allgemein bekannten "Steck"-Verfahren gewählt werden können, z.B. Nut-Feder. Andererseits sind stoffschlüssige Verbindungen z.B. über geeignete Klebstoffe möglich. Damit können Lagerelemente mit unterschiedlichen Eigenschaften verwendet werden, die je nach ihrer Anordnung im Lager spezifische Anforderungen übernehmen können. Werden mindestens drei Lagerelemente (ii) eingesetzt, weisen diese bevorzugt unterschiedliche Dichten und somit unterschiedliche mechanische und dynamische Eigenschaften auf. Während beispielsweise ein Lagerelement (ii) aus einem mikrozelligen PUR mit geringer Dichte bestehen kann, um im Einsatzfall durch die Relativbewegung zur Innen- und Außenbuchse viel Dämpfung zu erzeugen, kann ein weiteres Lagerelement (ii) im Lager aus einem mikrozelligen Pur mit hoher Dichte gefertigt sein, um dynamische Steifigkeiten zu gewährleisten und um die max. Verformung zu reduzieren. Erfindungsgemäß kann somit auf speziellen Anforderungen eingegangen werden. Das erfindungsgemäße Lagerelement (ii) basiert üblicherweise auf Gummi oder zelligen oder kompakten (TPU, Gießelastomer) Polyisocyanat-Polyadditionsprodukten, bevorzugt auf zelligen Polyisocyanat-Polyadditionsprodukten. Besonders bevorzugt basiert das Lagerelement (ii) auf zelligen Polyisocyanat-Polyadditionsprodukten, bevorzugt auf der Basis von zelligen Polyurethanelastomeren, die ggf. Polyhamstoffstrukturen enthalten können, besonders bevorzugt auf der Basis von zelligen Polyurethanelastomeren bevorzugt mit einer Dichte nach DIN 53 420 von 200 kg/m³ bis 1100 kg/m³, bevorzugt 300 kg/m³ bis 800 kg/m³, einer Zugfestigkeit nach DIN 53571 von ≥ 2 N/mm², bevorzugt 2 N/mm² bis 8 N/mm², einer Dehnung nach DIN 53571 von ≥ 300 %, bevorzugt 300 % bis 700 % und einer Weiterreißfestigkeit nach DIN 53515 von ≥ 8 N/mm, bevorzugt 8 N/mm bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 mm bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschrieben, beispielsweise in EP-A 62 835, EP-A 36 994, EP-A 250 969, DE-A 195 48 770 und DE-A 195 48 771. Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird.

Die Außenbuchse (i) kann auf üblichen Materialien basieren, beispielsweise Metallen, z.B. Stahl, Eisen und/oder Aluminium oder harten Kunststoffen, z.B. TPU. Bevorzugt basiert die Außenbuchse auf dem gleichen Materialen wie das Objekt, in dem sie zum Einsatz kommen soll, besonders bevorzugt, beispielsweise im Falle der Montage in Karosserien, auf Stahl und/oder Aluminium, insbesondere Stahl. Die Außenbuchse (i) verfügt über einen Außendurchmesser und einen Innendurchmesser, die in den Abmaßen und Ausführungen variieren können.

Das Bauteil (x) kann auf üblichen Materialien basieren, beispielsweise Metallen, z.B. Stahl, Eisen und/oder Aluminium oder harten Kunststoffen, z.B. TPU, POM, Polyamid.

Innenbuchse (iii), Außenbuchse (i) und Bauteil (x) können auf gleichen oder unterschiedlichen Materialien basieren.

## Patentansprüche

1. Lager enthaltend eine hohle Außenbuchse (i), mindestens ein hohles Lagerelement (ii)und eine hohle Innenbuchse (iii), wobei mindestens zwei hohle Lagerelemente (ii) in dem Lager enthalten sind, die unterschiedliche innere und/oder äußere Abmaße aufweisen, **dadurch gekennzeichnet, dass** zwischen Außenbuchse (i) und Lagerelement (ii) mindestens ein Bauteil (x) positioniert ist, dessen Geometrie variiert.

2. Lager gemäß Anspruch 1, **dadurch gekennzeichnet, dass** mindestens drei hohle Lagerelemente (ii) in dem Lager enthalten sind, die unterschiedliche innere und/oder äußere Abmaße aufweisen.

3. Lager gemäß Anspruch 1, **dadurch gekennzeichnet, dass** die hohlen Lagerelemente (ii) mit mindestens einer ihrer äußeren Flächen in Kontakt mit der inneren Oberfläche des hohlen Bauteiles (x) stehen.

4. Lager gemäß Anspruch 3, **dadurch gekennzeichnet, dass** die Hohlräume der hohlen Lagerelemente (ii) das gleiche Maß aufweisen und in diesen Hohlräumen in Kontakt mit den Lagerelementen (ii) die Innenbuchse platziert ist.

5. Lager gemäß Anspruch 4, **dadurch gekennzeichnet, dass** das äußere Maß der Lagerelemente (ii) entsprechend dem inneren Maß des Bauteiles (x) variiert.

6. Lager gemäß Anspruch 1, **dadurch gekennzeichnet, dass** das Bauteil (x) eine axiale Verschiebung der Lagerelemente (ii) zwischen Außenbuchse (i) und Innenbuchse (iii) in eine Richtung begrenzt.

7. Lager gemäß Anspruch 1, **dadurch gekennzeichnet, dass** das Bauteil (x) einen Rand (xi) aufweist, der die eine Stirnseite von der hohlen Außenbuchse (i) zumindest teilweise abdeckt.

8. Lager gemäß Anspruch 1, **dadurch gekennzeichnet, dass** die hohle Innenbuchse (iii) und das Bauteil (x) auf Metall oder harten Kunststoffen basieren und das oder die Lagerelemente (ii) auf kompakten und/oder zelligen Elastomeren und/oder auf zelligen Polyisocyanat-Polyadditionsprodukten basiert.

9. Lager gemäß Anspruch 1, **dadurch gekennzeichnet, dass** mindestens zwei Lagerelemente (ii) enthalten sind, bei denen mindestens ein Lagerelement (ii) auf kompakten und mindestens ein Lagerelement (ii) auf zelligen Elastomeren basiert.

10. Lager gemäß Anspruch 1, **dadurch gekennzeichnet, dass** das Lagerelement (ii) einen äußeren Durchmesser zwischen 20 mm und 150 mm, einen Durchmesser des Hohlraums zwischen 10 mm und 80 mm und eine Länge zwischen 15 mm und 100 mm aufweist.

11. Lager gemäß Anspruch 1, **dadurch gekennzeichnet, dass** die Karosserie (xiii) eines Kraftfahrzeugs fest mit der Innenbuchse (iii) verbunden ist und an dem Bauteil (x) (i) Fahrwerksteile (xii) befestigt sind.

12. Lager gemäß Anspruch 1, **dadurch gekennzeichnet, dass** die Karosserie (xiii) eines Kraftfahrzeugs fest mit der Innenbuchse (iii) verbunden ist das Lager über einen Deckel (xiv) gespannt wird.

13. Automobile oder Lastkraftwagen enthaltend Lager gemäß einem der Ansprüche 1 bis 12.

## Claims

1. A bearing comprising a hollow outer bush (i), at least one hollow bearing element (ii) and a hollow inner bush (iii), the bearing comprising at least two hollow bearing elements (ii) which have different internal and/or external dimensions, wherein at least one component (x) whose geometry varies is positioned between outer bush (i) and bearing element (ii).

2. The bearing according to claim 1, wherein the bearing comprises at least three hollow bearing elements (ii) which have different internal and/or external dimensions.

3. The bearing according to claim 1, wherein the hollow bearing elements (ii) are in contact, at at least one of their outer surfaces, with the inner surface of the hollow component (x).

4. The bearing according to claim 3, wherein the cavities of the hollow bearing elements (ii) have the same dimension and the inner bush is placed in these cavities in contact with the bearing elements (ii).

5. The bearing according to claim 4, wherein the external dimension of the bearing elements (ii) varies according to the internal dimension of the component (x).

6. The bearing according to claim 1, wherein the component (x) limits an axial displacement of the bearing elements (ii) between outer bush (i) and inner bush (iii) in one direction.

7. The bearing according to claim 1, wherein the component (x) has an edge (xi) which at least partly covers the one end face of the hollow outer bush (i).

8. The bearing according to claim 1, wherein the hollow inner bush (iii) and the component (x) are based on metal or hard plastics and the bearing element or bearing elements (ii) is or are based on compact and/or cellular elastomers and/or on cellular polyisocyanate polyadducts.

9. The bearing according to claim 1, wherein at least two bearing elements (ii) are present, of which at least one bearing element (ii) is based on compact and at least one bearing element (ii) on cellular elastomers.

10. The bearing according to claim 1, wherein the bearing element (ii) has an external diameter of from 20 mm to 150 mm, a cavity diameter of from 10 mm to 80 mm and a length of from 15 mm to 100 mm.

11. The bearing according to claim 1, wherein the bodywork (xiii) of a motor vehicle is firmly connected to the inner bush (iii) and chassis parts (xii) are fixed to the component (x)(i).

12. The bearing according to claim 1, wherein the bodywork (xiii) of a motor vehicle is firmly connected to the inner bush (iii) and the bearing is clamped above a cover (xiv).

13. An automobile or truck comprising a bearing according to any of claims 1 to 12.

## Revendications

1. Palier comprenant une douille extérieure creuse (i), au moins un élément de palier creux (ii) et une douille intérieure creuse (iii), dans lequel sont compris au moins deux éléments de palier creux (ii) qui présentent des dimensions intérieures et/ou extérieures différentes, **caractérisé en ce qu'**au moins un composant (x) dont la géométrie varie est positionné entre la douille extérieure (i) et l'élément de palier (ii).

2. Palier selon la revendication 1, **caractérisé en ce qu'**au moins trois éléments de palier creux qui présentent des dimensions intérieures et/ou extérieures différentes sont contenus dans le palier.

3. Palier selon la revendication 1, **caractérisé en ce que** les éléments de palier creux (ii) sont en contact par au moins une de leurs surfaces extérieures avec la surface intérieure du composant creux (x).

4. Palier selon la revendication 3, **caractérisé en ce que** les cavités des éléments de palier creux (ii) présentent la même taille et la douille intérieure est mise en contact avec les éléments de palier (ii) dans ces cavités.

5. Palier selon la revendication 4, **caractérisé en ce que** la taille extérieure des éléments de palier (ii) varie en fonction de la taille intérieure du composant (x).

6. Palier selon la revendication 1, **caractérisé en ce que** le composant (x) limite un déplacement axial des éléments de palier (ii) entre la douille extérieure (i) et la douille intérieure (iii) dans une direction.

7. Palier selon la revendication 1, **caractérisé en ce que** le composant (x) présente un bord (xi) qui recouvre au moins en partie un côté frontal de la douille extérieure creuse (i).

8. Palier selon la revendication 1, **caractérisé en ce que** la douille intérieure creuse (iii) et le composant (x) sont à base de métal ou de matières synthétiques dures et le ou les éléments de palier (ii) sont à base d'élastomères compacts et/ou cellulaires et/ou de produits de polyaddition de polyisocyanate cellulaires.

9. Palier selon la revendication 1, **caractérisé en ce qu'**il comprend au moins deux éléments de palier (ii) dont au moins un élément de palier (ii) est à base d'élastomères compacts et au moins un élément de palier (ii) est à base d'élastomères cellulaires.

10. Palier selon la revendication 1, **caractérisé en ce que** l'élément de palier (ii) présente un diamètre extérieur compris entre 20 mm et 150 mm, un diamètre de la cavité compris entre 10 mm et 80 mm et une longueur comprise entre 15 mm et 100 mm.

11. Palier selon la revendication 1, **caractérisé en ce que** la carrosserie (xiii) d'un véhicule automobile est reliée fermement à la douille intérieure (iii) et des parties du châssis (xii) sont fixées au composant (x) (i).

12. Palier selon la revendication 1, **caractérisé en ce que** la carrosserie (xiii) d'un véhicule automobile est reliée fermement à la douille intérieure (iii) et le palier est serré par l'intermédiaire d'un couvercle (xiv).

13. Automobile ou camion contenant un palier selon l'une des revendications 1 à 12.
